(19) Europäisches Patentamt
European Patent Office
Office européen des brevets

(11) EP 2 813 438 A1

(12) EUROPEAN PATENT APPLICATION

(43) Date of publication:
17.12.2014 Bulletin 2014/51

(51) Int Cl.:
*B65D 1/02* (2006.01) *C08F 210/06* (2006.01)

(21) Application number: 13171338.0

(22) Date of filing: 11.06.2013

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(71) Applicant: **Basell Poliolefine Italia S.r.l.**
**20127 Milano (IT)**

(72) Inventors:
- **Destro, Mara**
  **44138 Bologna (IT)**
- **Ciarafoni, Marco**
  **44123 Ferrara (IT)**
- **Massari, Paola**
  **44121 Ferrara (IT)**
- **Caputo, Tiziana**
  **44121 Ferrara (IT)**
- **Böhm, Thomas**
  **64291 Darmstadt (DE)**

(74) Representative: **Sacco, Marco**
**Basell Poliolefine Italia S.r.l.**
**Intellectual Property**
**P.le Donegani, 12**
**44122 Ferrara (IT)**

(54) **Propylene based terpolymers**

(57) A container comprising a propylene, ethylene, 1-butene terpolymer wherein in the terpolymer:
i) the content of ethylene derived units ranges from 0.5 wt% to 1.8 wt%;
ii) the content of 1-butene derived units ranges from 3.5 wt% to 6.5 wt%;
iii) the ratio C2wt%/C4wt% ranges from 0.12 to 0.22; wherein C2wt% is the weight per cent of ethylene derived units and C4wt% is the weight per cent of 1-butene derived units;
iv) the total content of ethylene and 1-butene derived units is comprised between 4.2 wt% and 7.5 wt%;
v) the melt flow rate ,MFR measured according to ISO 1133 ,230° C, 2.16 kg ranges from 20 to 80 g/10 min;
vi) the xylene soluble fraction at 25°C is lower than 7.0 wt%;
vii) the melting point is higher than 140°C.

EP 2 813 438 A1

## Description

The present invention relates to containers, especially containers for food, having a particular balance of optical and mechanical properties. Said containers comprise a propylene/ethylene/1-butene terpolymer having particular properties. Articles made of propylene terpolymers are known in the art.

Propylene terpolymers are used because, with respect to propylene homopolymers, are characterized by a better impact, lower rigidity and better transparency. In some cases however, it is difficult to find the acceptable balance between those properties, particularly when properties contrasting to each other are desired. When a certain softness is desired, for example, it is commonly obtained in the presence of high amount of xylene soluble fractions that make them unsuitable for food contact applications.

Furthermore, WO 98/58971 discloses a process for producing terpolymers of propylene, ethylene and other alpha-olefins comprising slurry and gas phase reactors connected together. The process comprises using a combination of two or more reactors connected in a cascade for producing a polymer product exhibiting a ratio of ethylene-to-butene less than 0.3. The drawback related to this terpolymer product is the too low melting temperature and the consequent narrow processability window.

WO 2009/019169 relates to a propylene/ethylene/1-butene terpolymer prepared in a gas phase reactor comprising two interconnected polymerization zones. Said terpolymer has among other features the ratio between ethylene amount (wt%) and 1-butene amount (wt%) ranging from 0.1 to 0.8 a xylene soluble fraction at 25°C higher than 9 wt% and the total content of comonomer units of not less than 8 wt%.

The applicant found that working out of these parameters it is possible to obtain a material having improved optical properties.

Thus an object of the present invention is a container, preferably a container for food comprising a propylene, ethylene, 1-butene terpolymer wherein in the terpolymer:

i) the content of ethylene derived units ranges from 0.5 wt% to 1.8 wt%; preferably from 0.7wt% to 1.5 wt%; more preferably from 0.9 wt% to 1.3 wt%;

ii) the content of 1-butene derived units ranges from 3.5 wt% to 6.5 wt%; preferably from 4.5 wt% to 6.0 wt%; more preferably from 5 wt% to 6.0 wt%; even more preferably more preferably from 5.5 wt% to 6.0 wt%;

iii) the ratio C2wt%/C4wt% ranges from 0.12 to 0.22; preferably from 0.14 to 0.20; more preferably from 0.15 to 0.20 ; wherein C2wt% is the weight per cent of ethylene derived units and C4wt% is the weight per cent of 1-butene derived units;

iv) the total content of ethylene and 1-butene derived units is comprised between 4.2 wt% and 7.5 wt% preferably between 4.5 and 7.0 wt%;

v) the melt flow rate ,MFR measured according to ISO 1133 ,230° C, 2.16 kg ranges from 20 to 80 g/10 min; preferably from 25 to 70 g/10 min; more preferably from 31 to 52 g/10 min.

vi) the xylene soluble fraction at 25°C is lower than 7.0 wt%; preferably lower than 6.0 wt% more preferably lower than 5.5 wt%;

vii) the melting point is higher than 140°C; preferably it is comprised between 140°C and 152°C; more preferably it is comprised between 141°C and 148°C.

For the term terpolymer in the present invention it is meant e polymer containing only propylene, ethylene and 1-butene derived units the sum of these three comonomers derived units content being 100 wt%.

Preferably the terpolymer of the present invention has a fraction soluble in hexane (measured on film according to FDA 21 77:1520) lower than 3.4 wt%, preferably lower than 3.0 wt% more preferably lower than 2.0 wt%.

Preferably the terpolymer of the present invention has the gloss measured on 1 mm plaque higher than 120 %, more preferably higher than 125 % even more preferably higher than 128%.

In order to achieve the MFR of the terpolymer it is also possible to visbreak a polymer having a lower MFR. In order to visbreak the polymer known visbreaking agent can be used such as peroxides. With the visbreaking it is possible to fine tune the MFR of the product.

The terpolymers have a stereoregularity of isotactic type of the propylenic sequences this is clear by the low value of xylene extractables that is lower than 15 wt%.

The hexane extractables measured according to FDA 21 77:1520 is lower than 2 wt% ; preferably lower than 1.9 wt%; more preferably equal to or lower than 1.7 wt%. Furthermore the container of the present invention is preferably endowed with a low value of haze. The haze (in a container having 0.4 mm wall thick ) is lower than 5.0 %; preferably lower than 4.0%; more preferably lower than 3.8 %.

The top load of a container having 0.4 mm wall thick is higher than 200 N; preferably higher than 250 N;

The container of the present invention can be obtained with method commonly known in the art such as injection molding.

The terpolymer for the container of the present invention can be prepared by polymerisation in one or more polymerisation steps. Such polymerisation can be carried out in the presence of Ziegler-Natta catalysts. An essential component of said catalysts is a solid catalyst component comprising a titanium compound having at least one titanium-halogen bond, and an electron-donor compound, both supported on a magnesium halide in active form. Another essential component (co-catalyst) is an organoaluminium compound, such as an aluminium alkyl compound.

An external donor is optionally added.

The catalysts generally used in the process of the invention are capable of producing polypropylene with a value of xylene insolubility at ambient temperature greater than 90%, preferably greater than 95%.

Catalysts having the above mentioned characteristics are well known in the patent literature; particularly advantageous are the catalysts described in US patent 4,399,054 and European patent 45977. Other examples can be found in US patent 4,472,524.

The solid catalyst components used in said catalysts comprise, as electron-donors (internal donors), compounds selected from the group consisting of ethers, ketones, lactones, compounds containing N, P and/or S atoms, and esters of mono- and dicarboxylic acids.

Particularly suitable electron-donor compounds are esters of phtalic acid and 1,3-diethers of formula:

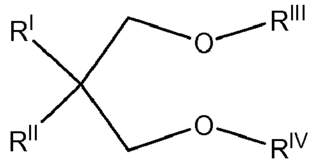

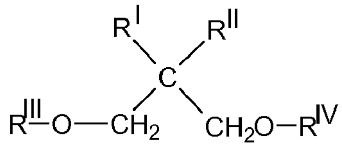

wherein $R^I$ and $R^{II}$ are the same or different and are $C_1$-$C_{18}$ alkyl, $C_3$-$C_{18}$ cycloalkyl or $C_7$-$C_{18}$ aryl radicals; $R^{III}$ and $R^{IV}$ are the same or different and are $C_1$-$C_4$ alkyl radicals; or are the 1,3-diethers in which the carbon atom in position 2 belongs to a cyclic or polycyclic structure made up of 5, 6, or 7 carbon atoms, or of 5-n or 6-n' carbon atoms, and respectively n nitrogen atoms and n' heteroatoms selected from the group consisting ofN, O, S and Si, where n is 1 or 2 and n' is 1, 2, or 3, said structure containing two or three unsaturations (cyclopolyenic structure), and optionally being condensed with other cyclic structures, or substituted with one or more substituents selected from the group consisting of linear or branched alkyl radicals; cycloalkyl, aryl, aralkyl, alkaryl radicals and halogens, or being condensed with other cyclic structures and substituted with one or more of the above mentioned substituents that can also be bonded to the condensed cyclic structures; one or more of the above mentioned alkyl, cycloalkyl, aryl, aralkyl, or alkaryl radicals and the condensed cyclic structures optionally containing one or more heteroatom(s) as substitutes for carbon or hydrogen atoms, or both.

Ethers of this type are described in published European patent applications 361493 and 728769.

Representative examples of said diethers are 2-methyl-2-isopropyl-1,3-dimethoxypropane, 2,2-diisobutyl-1,3-dimethoxypropane, 2-isopropyl-2-cyclopentyl-1,3-dimethoxypropane, 2-isopropyl-2-isoamyl-1,3-dimethoxypropane, 9,9-bis (methoxymethyl) fluorene.

Other suitable electron-donor compounds are phthalic acid esters, such as diisobutyl, dioctyl, diphenyl and benzylbutyl phthalate.

It is also possible to use mixture of at least two electron donor compounds one of which being present in an amount from 30 to 90% by mol with respect to the total amount of donors and selected from succinates and the other being selected from 1,3 diethers.

The preparation of the above mentioned catalyst component is carried out according to various methods.

For example, a $MgCl_2 \cdot nROH$ adduct (in particular in the form of spheroidal particles) wherein n is generally from 1 to 3 and ROH is ethanol, butanol or isobutanol, is reacted with an excess of $TiCl_4$ containing the electron-donor compound. The reaction temperature is generally from 80 to 120° C. The solid is then isolated and reacted once more with $TiCl_4$, in the presence or absence of the electron-donor compound, after which it is separated and washed with aliquots of a hydrocarbon until all chlorine ions have disappeared.

In the solid catalyst component the titanium compound, expressed as Ti, is generally present in an amount from 0.5 to 10% by weight. The quantity of electron-donor compound which remains fixed on the solid catalyst component generally is 5 to 20% by moles with respect to the magnesium dihalide.

The titanium compounds, which can be used for the preparation of the solid catalyst component, are the halides and the halogen alcoholates of titanium. Titanium tetrachloride is the preferred compound.

The reactions described above result in the formation of a magnesium halide in active form. Other reactions are known in the literature, which cause the formation of magnesium halide in active form starting from magnesium compounds other than halides, such as magnesium carboxylates.

The Al-alkyl compounds used as co-catalysts comprise the Al-trialkyls, such as Al-triethyl, Al-triisobutyl, Al-tri-n-butyl, and linear or cyclic Al-alkyl compounds containing two or more Al atoms bonded to each other by way of O or N atoms, or $SO_4$ or $SO_3$ groups.

The Al-alkyl compound is generally used in such a quantity that the Al/Ti ratio be from 1 to 1000.

The electron-donor compounds that can be used as external donors include aromatic acid esters such as alkyl benzoates, and in particular silicon compounds containing at least one Si-OR bond, where R is a hydrocarbon radical.

Examples of silicon compounds are (tert-butyl)$_2$Si($OCH_3$)$_2$, (cyclohexyl)(methyl)Si ($OCH_3$)$_2$, (cyclopentyl)$_2$Si($OCH_3$)$_2$ and (phenyl)$_2$Si($OCH_3$)$_2$ and (1,1,2-trimethylpropyl)Si($OCH_3$)$_3$.

1,3-diethers having the formulae described above can also be used advantageously. If the internal donor is one of these diethers, the external donors can be omitted.

In particular, even if many other combinations of the previously said catalyst components may allow to obtain propylene polymer compositions according to the present invention, the terpolymers are preferably prepared by using catalysts containing a phthalate as internal donor and (cyclopentyl)$_2$Si($OCH_3$)$_2$ as outside donor, or the said 1,3-diethers as internal donors.

The said propylene-ethylene-butene-1 polymers are produced with a polymerization process illustrated in EP application 1 012 195.

In detail, the said process comprises feeding the monomers to said polymerisation zones in the presence of catalyst under reaction conditions and collecting the polymer product from the said polymerisation zones. In the said process the growing polymer particles flow upward through one (first) of the said polymerisation zones (riser) under fast fluidisation conditions, leave the said riser and enter another (second) polymerisation zone (downcomer) through which they flow downward in a densified form under the action of gravity, leave the said downcomer and are reintroduced into the riser, thus establishing a circulation of polymer between the riser and the downcomer.

In the downcomer high values of density of the solid are reached, which approach the bulk density of the polymer. A positive gain in pressure can thus be obtained along the direction of flow, so that it become to possible to reintroduce the polymer into the riser without the help of special mechanical means. In this way, a "loop" circulation is set up, which is defined by the balance of pressures between the two polymerisation zones and by the head loss introduced into the system.

Generally, the condition of fast fluidization in the riser is established by feeding a gas mixture comprising the relevant monomers to the said riser. It is preferable that the feeding of the gas mixture is effected below the point of reintroduction of the polymer into the said riser by the use, where appropriate, of gas distributor means. The velocity of transport gas into the riser is higher than the transport velocity under the operating conditions, preferably from 2 to 15 m/s.

Generally, the polymer and the gaseous mixture leaving the riser are conveyed to a solid/gas separation zone. The solid/gas separation can be effected by using conventional separation means. From the separation zone, the polymer enters the downcomer. The gaseous mixture leaving the separation zone is compressed, cooled and transferred, if appropriate with the addition of make-up monomers and/or molecular weight regulators, to the riser. The transfer can be effected by means of a recycle line for the gaseous mixture.

The control of the polymer circulating between the two polymerisation zones can be effected by metering the amount of polymer leaving the downcomer using means suitable for controlling the flow of solids, such as mechanical valves.

The operating parameters, such as the temperature, are those that are usual in olefin polymerisation process, for example between 50 to 120° C.

This first stage process can be carried out under operating pressures of between 0.5 and 10 MPa, preferably between 1.5 to 6 MPa.

Advantageously, one or more inert gases are maintained in the polymerisation zones, in such quantities that the sum of the partial pressure of the inert gases is preferably between 5 and 80% of the total pressure of the gases. The inert gas can be nitrogen or propane, for example.

The various catalysts are fed up to the riser at any point of the said riser. However, they can also be fed at any point of the downcomer. The catalyst can be in any physical state, therefore catalysts in either solid or liquid state can be used.

Conventional additives, fillers and pigments, commonly used in olefin polymers, may be added, such as nucleating agents, extension oils, mineral fillers, and other organic and inorganic pigments. In particular, the addition of inorganic fillers, such as talc, calcium carbonate and mineral fillers, also brings about an improvement to some mechanical properties, such as flexural modulus and HDT. Talc can also have a nucleating effect. The nucleating agents are added

to the compositions of the present invention in quantities ranging from 0.05 to 2% by weight, more preferably from 0.1 to 1% by weight, with respect to the total weight.

The container, object of the present invention can have various shapes, such as cubic, conic, or irregular shapes.

A further object of the present invention is a propylene, ethylene, 1-butene terpolymer as described above.

The following not-limiting examples are given to better illustrate the present invention.

Examples

The following characterization methods were used in testing the propylene terpolymers produced.

- Determination of the comonomer content:

- The comonomers content have been determined by infrared spectroscopy by collecting the IR spectrum of the sample vs. an air background with a Fourier Transform Infrared spectrometer (FTIR) the instrument data acquisition parameters are:
- purge time: 30 seconds minimum
- collect time: 3 minutes minimum
- apodization: Happ-Genzel
- resolution: 2 cm-1.
- Sample Preparation:
- Using a hydraulic press, a thick sheet is obtained by pressing about g 1 of sample between two aluminum foils. If homogeneity is in question, a minimum of two pressing operations are recommended. A small portion is cut from this sheet to mold a film. Recommended film thickness ranges between 0.02-:0.05 cm (8 - 20 mils).
- Pressing temperature is 180±10°C (356°F) and about 10 kg/cm2 (142.2 PSI) pressure for about one minute. Release the pressure and remove from the press and cool the sample to room temperature.
- The spectrum of a pressed film of the polymer is recorded in absorbance vs. wavenumbers (cm-1). The following measurements are used to calculate ethylene and 1-butene content:
- Area (At) of the combination absorption bands between 4482 and 3950 cm -1 which is used for spectrometric normalization of film thickness.
- Area (AC2) of the absorption band between 750-700 cm-1 after two proper consecutive spectroscopic subtractions of an isotactic non additivate polypropylene spectrum and then of a reference spectrum of an 1-butene-propylene random copolymer in the range 800-690 cm-1.
- Height (DC4) of the absorption band at 769 cm-1 (maximum value), after two proper consecutive spectroscopic subtractions of an isotactic non additivate polypropylene spectrum and then of a reference spectrum of an ethylene-propylene random copolymer in the range 800-690 cm-1.
- In order to calculate the ethylene and 1-butene content calibration straights lines for ethylene and 1-butene obtained by using samples of known amount of ethylene and 1-butene are needed:
- Calibration of ethylene:
- Calibration straight line is obtained by plotting AC2 /At versus ethylene molar percent (%C2m). The slope GC2 is calculated from a linear regression.
- Calibration of 1-butene
- A calibration straight line is obtained by plotting DC4 /At versus butene molar percent (%C4m). The slope GC4 is calculated from a linear regression.
- Spectrum of the unknown sample is recorded and then (At), (AC2) and (DC4) of the unknown sample are calculated. The ethylene content (% molar fraction C2m) of the sample is calculated as follows:

$$\%C2m = \frac{1}{G_{C2}} \cdot \frac{A_{C2}}{A_t}$$

- The 1,butene content (% molar fraction C4m) of the sample is calculated as follows:

$$\%C4m = \frac{1}{G_{C4}} \cdot \left(\frac{A_{C4}}{A_t} - I_{C4}\right)$$

- The propylene content (molar fraction C3m) is calculated as follows:

$$C3m = 100 - \%C4m - \%C2m$$

- The ethylene, 1-butene contents by weight are calculated as follows:

$$\%C2wt = 100 \cdot \frac{28 \cdot C2m}{(56 \cdot C4m + 42 \cdot C3m + 28 \cdot C2m)}$$

$$\%C4wt = 100 \cdot \frac{56 \cdot C4m}{(56 \cdot C4m + 42 \cdot C3m + 28 \cdot C2m)}$$

- Melt Flow Rate (MFR"L"): Determined according to ISO 1133 230°C, 2.16 kg.
- Solubility in xylene:
- 2.5 g of polymer and 250 ml of xylene are introduced in a glass flask equipped with a refrigerator and a magnetical stirrer. The temperature is raised in 30 minutes up to the boiling point of the solvent. The so obtained clear solution is then kept under reflux and stirring for further 30 minutes. The closed flask is then kept for 30 minutes in a bath of ice and water and in thermostatic water bath at 25° C for 30 minutes as well. The so formed solid is filtered on quick filtering paper. 100 ml of the filtered liquid is poured in a previously weighed aluminium container, which is heated on a heating plate under nitrogen flow, to remove the solvent by evaporation. The container is then kept on an oven at 80° C under vacuum until constant weight is obtained. The weight percentage of polymer soluble in xylene at room temperature is then calculated.
- Flexural modulus: Determined according to the ISO 178 method.
- Haze (on 1 mm plaque):
- According to the method used, 5x5 cm specimens are cut molded plaques of 1 mm thick and the haze value is measured using a Gardner photometer with Haze-meter UX-10 equipped with a G.E. 1209 lamp and filter C. The instrument calibration is made by carrying out a measurement in the absence of the sample (0% Haze) and a measurement with intercepted light beam (100% Haze).
- The measurement and computation principle are given in the norm ASTM-D1003.
- The plaques to be tested are produced according to the following method. 75x75x2 mm plaques are molded with a GBF Plastiniector G235/90 Injection Molding Machine, 90 tons under the following processing conditions:
- Screw rotation speed: 120 rpm
- Back pressure: 10 bar
- Melt temperature: 260°C
- Injection time: 5 sec
- Switch to hold pressure: 50 bar
- First stage hold pressure: 30 bar
- Second stage pressure: 20 bar
- Hold pressure profile: First stage 5 sec
- Second stage 10 sec
- Cooling time: 20 sec
- Mold water temperature: 40°C
- The plaques are conditioned for 12 to 48 hours at relative humidity of 50% and temperature of 23° C.
- Haze on container:

- The haze on container have been measured by cutting a 5x5 cm specimens from the container wall and using the same above procedure for the haze (on 1 mm plaque).
- Top Load:
- After at least 70 -hours conditioning at 23°C and 50% relative humidity, the bottle is settled between the two plates of the dynamometer and compressed with a stress velocity of the plate of 10mm/min.
- The stress at collapse of the container is recorded and the value reported in N. The Top Load value is the mean value obtained from measurements repeated on 6 containers.
- Container impact test (CIT)
- The test is a biaxial impact test, the container, bottom up, was put on a sample older, having the same dimension of the container
- The plate for the impact has a diameter of 62 mm and 5 kg of weight, it falls from 600 mm. The results are expressed in Joule. The results are an average of 10 tests.
- Containers to be tested
- Containers to be tested are produced with an injection moulding machine with the following specs:
- Injection moulding unit parameters:
- Injection screw stroke: 1200 kN
- Screw diameter: 32 mm
- Injected volume: 102.9 cm3
- Screw ratio L/D: 20
- Max injection press: 2151 bar
- The items to be tested must have the listed characteristics
- Volume: 250 cc
- Surface treatment: Polished
- The shape of the container is a truncated pyramid with a square base, wherein the top base has a side of 70 mm and the bottom base has a side of 50 mm, the height being 80 mm
- IZOD Impact Strength:
- Determined according to IS0 180/1A. Samples have been obtained according to ISO 294-2.
- The hexane extractables:
- measured according to FDA 21 77:1520

Gloss

Determined on the same specimens as for the Haze.

The instrument used for the test was a model 1020 Zehntner photometer for incident measurements. The calibration was made by carrying out a measurement at incidence angle of 60° on black glass having a standard Gloss of 96.2% and a measurement at an incidence angle of 45° on black glass having a standard Gloss of 55.4%.

Examples 1-2 and comparative example 3:

Propylene terpolymers are prepared by polymerising propylene, ethylene and butene-1 in the presence of a highly stereospecific Ziegler-Natta catalyst.

The Ziegler-Natta catalyst was prepared according to the Example 5, lines 48-55 of the European Patent EP728769. Triethylaluminium (TEA) was used as co-catalyst and dicyclopentyldimethoxysilane as external donor, with the weight ratios indicated in Table 1. The above catalyst system is then transferred into a reactor containing an excess of liquid propylene and propane to carry out prepolymerisation at 25° C for 11 minutes before introducing it into a polymerisation reactor.

The propylene terpolymers of the examples were prepared in a single gas-phase polymerization reactor comprising two interconnected polymerization zones, a riser and a downcomer, as described in the European Patent EP782587 and WO00/02929.

Into the polymerisation reactor the propylene terpolymers are produced by feeding in a continuous and constant flow the prepolymerized catalyst system, hydrogen (used as molecular weight regulator), propylene, ethylene and butene-1 in the gas state (the feeding quantities expressed in mol% are shown in table 1). The polymer particles exiting from the polymerization step were subjected to a steam treatment to remove the unreacted monomers and dried.

The other operative conditions are indicated in Table 1.

Table 1 - Polymerization Process

| | | Ex.1 | Ex. 2 | Comparative Ex. 3 |
|---|---|---|---|---|
| **Example** | | | | |
| | | | | |
| TEAL/external donor | wt/wt | 6 | 6 | 4 |
| TEAL/catalyst | wt/wt | 6 | 6 | 6 |
| Temperature | °C | 72 | 72 | 75 |
| Pressure | bar-g | 26 | 26 | 27 |
| Split holdup riser | wt% | 42 | 40 | 41 |
| downcomer | wt% | 58 | 60 | 59 |
| $C_4^-$ riser | mole% | 3.5 | 5.2 | 2.5 |
| $C_2^-$ riser | mole% | 0.5 | 0.5 | 0.5 |
| $H_2/C_3^-$ riser | mol/mol | 0.12 | 0.046 | 0.058 |
| $C_4^-/(C_4^-+C_3^-)$ | mol/mol | 0.07 | 0.087 | 0.042 |
| $C_2^-$= ethylene $C_3^-$ = propylene $C_4^-$ = Butene | | | | |

The polymer particles of examples 1-2 and comparative example 3 are introduced in an extruder, wherein they are mixed with 500 ppm of Irganox 1010 and 1000 ppm of Irgafos 168 and 500 ppm of Ca stearate, 1000 ppm of GMS 90 and 4000 ppm of NX8000. The polymer particles are extruded under nitrogen atmosphere in a twin screw extruder, at a rotation speed of 250 rpm and a melt temperature of 200-250° C.

Properties of the obtained material have been reported in table 2 comparative example 4 is example 1 of WO 2009/019169:

Table 2

| | | Ex.1 1833 | Ex 2 1834 | Comp Ex 3 1835 | Comp Ex 4 |
|---|---|---|---|---|---|
| Ethylene content | Wt% | 0.9 | 1.1 | 1.0 | 3.10 |
| 1-butene content | Wt% | 5.6 | 5.7 | 2.9 | 5.9 |
| C2/C4 ratio | | 0.16 | 0.19 | 0.34 | 0.52 |
| Total comonomer content | Wt% | 6.5 | 6.8 | 3.9 | 9 |
| Xylene soluble | Wt% | 3.3 | 5.0 | 3.7 | 10.0 |
| Hexane extractable on film | % | 1.4 | 1.7 | 1.5 | 3.5 |
| MFR | dl/g | 38 | 40 | 66 | 5.9 |
| Haze 1mm plaque | % | 5.0 | 5.1 | 12.1 | - |
| Gloss 60°C 1mm plaque | **%** | 131 | 138 | 115 | 88 (on film) |
| Melting point | °C | 144.1 | 145.3 | 149.5 | 137.5 |

The polymer obtained have been moulded in containers as described above. The containers have been analysed, the results are reported on table 3.

Table 3

| | | Ex.1 | Ex 2 | Comp Ex3 |
|---|---|---|---|---|
| Haze | % | 3.4 | 3.6 | 6.9 |

(continued)

| | | Ex.1 | Ex 2 | Comp Ex3 |
|---|---|---|---|---|
| Container Impact Test @ +23°C | J | 2.2 | 2.1 | 1.5 |

From table 2 clearly results that the material according to the present invention shows an improved haze and gloss with respect to comparative example 3 wherein the total comonomer content is lower than the claimed range and comparative example 4 wherein the total comonomer content is higher than the claimed range. In comparative example 4 the value of gloss reported is measured on a 50$\mu$m thick film. Thus the improvement is still higher since the value of the gloss on film is comparable with the value of the gloss on 1 mm plaque reported for the example of the present invention. This difference is enhanced in the container properties wherein the haze measured on the container of the examples of the present invention is lower and the impact test is higher with respect to comparative example 3.

## Claims

**1.** A container comprising a propylene, ethylene, 1-butene terpolymer wherein in the terpolymer:

i) the content of ethylene derived units ranges from 0.5 wt% to 1.8 wt%;
ii) the content of 1-butene derived units ranges from 3.5 wt% to 6.5 wt%;
iii) the ratio C2wt%/C4wt% ranges from 0.12 to 0.22; wherein C2wt% is the weight per cent of ethylene derived units and C4wt% is the weight per cent of 1-butene derived units;
iv) the total content of ethylene and 1-butene derived units is comprised between 4.2 wt% and 7.5 wt%;
v) the melt flow rate ,MFR measured according to ISO 1133 ,230° C, 2.16 kg ranges from 20 to 80 g/10 min;
vi) the xylene soluble fraction at 25°C is lower than 7.0 wt%;
vii) the melting point is higher than 140°C.

**2.** The container according to claim 1 wherein in the terpolymer the content of ethylene derived units ranges from 0.7wt% to 1.5 wt%.

**3.** The container according to claims 1 or 2 wherein in the terpolymer the content of 1-butene derived units ranges from 4.5 wt% to 6.0 wt%;

**4.** The container according to any of claims 1-3 wherein in the terpolymer the total content of ethylene and 1-butene derived units is comprised between 4.5 and 7.0 wt%;

**5.** The container according to any of claims 1-4 wherein in the terpolymer the melting point is comprised between 140°C and 152°C.

**6.** The container according to any of claims 1-4 wherein the terpolymer has the gloss measured on 1 mm plaque higher than 120 %.

**7.** A propylene, ethylene, 1-butene terpolymer having:

i) the content of ethylene derived units ranges from 0.5 wt% to 1.8 wt%;
ii) the content of 1-butene derived units ranges from 3.5 wt% to 6.5 wt%;
iii) the ratio C2wt%/C4wt% ranges from 0.12 to 0.22; wherein C2wt% is the weight per cent of ethylene derived units and C4wt% is the weight per cent of 1-butene derived units;
iv) the total content of ethylene and 1-butene derived units is comprised between 4.2 wt% and 7.5 wt%;
v) the melt flow rate ,MFR measured according to ISO 1133 ,230° C, 2.16 kg ranges from 20 to 80 g/10 min;
vi) the xylene soluble fraction at 25°C is lower than 7.0 wt%;
vii) the melting point is higher than 140°C.

Europäisches Patentamt
European Patent Office
Office européen des brevets

# EUROPEAN SEARCH REPORT

Application Number
EP 13 17 1338

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 941 997 A1 (BOREALIS TECH OY [FI]) 9 July 2008 (2008-07-09) * paragraphs [0002], [0010], [0011], [0015], [0017], [0069] - [0071], [0090], [0091] * * page 14 - page 15; examples 1,2; table 1 * ----- | 1-7 | INV. B65D1/02 C08F210/06 |
| A | EP 1 209 187 A1 (BOREALIS GMBH [AT]) 29 May 2002 (2002-05-29) * paragraphs [0001], [0004], [0012], [0038], [0051] - [0053] * ----- | 1-7 | |
| A,D | WO 2009/019169 A1 (BASELL POLIOLEFINE SRL [IT]; CAVALIERI CLAUDIO [IT]; CAGNANI CAMILLO [) 12 February 2009 (2009-02-12) * the whole document * ----- | 1-7 | |
| | | | TECHNICAL FIELDS SEARCHED (IPC) |
| | | | B65D C08F |

The present search report has been drawn up for all claims

1

| Place of search | Date of completion of the search | Examiner |
|---|---|---|
| Munich | 24 October 2013 | Lippert, Sigrid |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 13 17 1338

This annex lists the patent family members relating to the patent documents cited in the above-mentioned European search report.
The members are as contained in the European Patent Office EDP file on
The European Patent Office is in no way liable for these particulars which are merely given for the purpose of information.

24-10-2013

| Patent document cited in search report | Publication date | Patent family member(s) | Publication date |
|---|---|---|---|
| EP 1941997 A1 | 09-07-2008 | AT 432165 T | 15-06-2009 |
| | | CN 101573231 A | 04-11-2009 |
| | | EP 1941997 A1 | 09-07-2008 |
| | | EP 2125369 A1 | 02-12-2009 |
| | | ES 2326752 T3 | 19-10-2009 |
| | | ES 2417187 T3 | 06-08-2013 |
| | | US 2009274921 A1 | 05-11-2009 |
| | | WO 2008074699 A1 | 26-06-2008 |
| EP 1209187 A1 | 29-05-2002 | AU 1605002 A | 11-06-2002 |
| | | EP 1209187 A1 | 29-05-2002 |
| | | EP 1352016 A1 | 15-10-2003 |
| | | WO 0244252 A1 | 06-06-2002 |
| WO 2009019169 A1 | 12-02-2009 | AT 536932 T | 15-12-2011 |
| | | CN 101772376 A | 07-07-2010 |
| | | EP 2173471 A1 | 14-04-2010 |
| | | JP 2010535863 A | 25-11-2010 |
| | | KR 20100071969 A | 29-06-2010 |
| | | RU 2010107625 A | 10-09-2011 |
| | | TW 200911846 A | 16-03-2009 |
| | | US 2010137505 A1 | 03-06-2010 |
| | | WO 2009019169 A1 | 12-02-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9858971 A
- WO 2009019169 A
- US 4399054 A
- EP 45977 A
- US 4472524 A
- EP 361493 A
- EP 728769 A
- EP 1012195 A
- EP 782587 A
- WO 0002929 A